# EUROPEAN PATENT APPLICATION

(11) **EP 2 600 476 A1**
(43) Date of publication of application: **05.06.2013**
(21) Application number: 12192581.2
(22) Date of filing: 14.11.2012
(51) Int. Cl.: H02H 5/04, B60L 11/18, H02J 7/02

(54) **Power safety system and method having a plurality of thermally-triggered electrical breaking arrangements**

(30) Priority: 29.11.2011 US 201113306327
(71) Applicant: Delphi Technologies, Inc., Troy, MI 48007 (US)
(72) Inventor: Drew, George A., Warren, OH Ohio 44484 (US); Kiko, Jeffrey S., Kent, OH Ohio 44240 (US); Musick, Steven A., Burton, OH Ohio 44021 (US); Boyer, Richard J., Mantua, OH Ohio 44255 (US); Pasha, Brian D., Cortland, OH Ohio 44410 (US); Fuzo, John V., Cortland, OH Ohio 44410 (US)
(74) Representative: Robert, Vincent

(57) **Abstract**

A power safety system (PSS) includes a plurality of thermally-triggered electrical breaking arrangements (TTEBAs (11) ). The plurality of TTEBAs are associated with a plurality of electrical devices (EDs (12,13) ) disposed external to the PSS. The PSS further includes a plurality of electrical power connections (EPCs (19) ) associated with said plurality of TTEBAs (11) that are configured to respectively electrically connect the PSS to the plurality of EDs (12,13). When at least one TTEBA in the plurality of TTEBAs is electrically operative and at least one thermal event occurs that is sufficient to thermally activate the at least one electrically operative TTEBA, at least the EPC (19) associated with the at least one thermally activated TTEBA is electrically broken. A method to protect a human operator of the PSS from a thermal event is also presented. A PSS also extends to a primary and a secondary electrical charging system (10) used to charge a battery of a vehicle (14).

## Description

### TECHNICAL FIELD

This invention is directed to a power safety system, more particularly, a power safety system that includes a plurality of thermally-triggered electrical breaking arrangements associated with a plurality of electrical devices disposed external to the power safety system so that when a breaking arrangement thermally breaks, a power connection associated with the breaking arrangement that electrically connects the PSS with the associated electrical device is electrically broken.

### BACKGROUND OF INVENTION

It is known to use a battery charger to electrically charge a battery on a vehicle.

With the increasing popularity of hybrid and/or electric vehicles, electrical chargers used to electrically charge the battery on these vehicles are also becoming more prevalent. Plug-in electrical chargers are in electrical communication with a power source and may be more prone to a possible undesired thermal event as the electrical breaker in electrical communication with the electrical outlet where the plug-in electrical charger is connected may not electrically break if a thermal event occurs. It is desired to safely protect a human operator of such an electrical charger in such a thermal event. It is also desired to further protect the human operator from other potential thermal events when handling a charge handle, or coupler of the electrical charging system that mechanically and electrically connects with the vehicle. The charge coupler, or handle may be remotely disposed from the power source and the electrical charger such that a thermal event that occurs at the vehicle where the handle is disposed may not be sensed at the power source or the electrical charger. It is also desirable to protect the human operator from a thermal event in a power safety system that includes both a primary and a secondary electrical charging system.

Accordingly, what is needed is a power safety system (PSS) that protects the human operator from thermal events that includes a plurality of thermally-triggered electrical breaking arrangements (TTEBAs) associated with a plurality of electrical devices (EDs) disposed external to the PSS, that when thermally activated, electrically breaks a power connection associated with the corresponding TTEBA that electrically connects the PSS and the associated electrical device.

### SUMMARY OF THE INVENTION

In one aspect of the invention, a power safety system (PSS) includes a plurality of thermally-triggered electrical breaking arrangements (TTEBAs) that are associated with a plurality of electrical devices (EDs) disposed external to the PSS. The PSS also includes a plurality of electrical power connections (EPCs) associated with the plurality of TTEBAs that are configured to respectively electrically connect the PSS to the plurality of EDs. When at least one TTEBA in the plurality of TTEBAs is electrically operative, and at least one thermal event occurs that is sufficient to thermally activate the at least one electrically operative TTEBA, at least the EPC associated with the at least one thermally activated TTEBA is electrically broken.

In another aspect of the invention, a method to protect a human operator of a PSS from a thermal event includes a step of providing the PSS that includes a plurality of TTEBAs associated with a plurality of EDs disposed external to the PSS. Another step in the method is thermally activating at least one TTEBA in the plurality of TTEBAs due to the thermal event when the PSS is electrically connected to at least one power supply. A further step in the method is electrically breaking an electrical power connection associated with the at least one thermally activated TTEBA between the PSS and the corresponding ED by the PSS.

Further features, uses and advantages of the invention will appear more clearly on a reading of the following detailed description of the embodiments of the invention, which is given by way of non-limiting example only and with reference to the accompanying drawings.

### BRIEF DESCRIPTION OF THE DRAWINGS

This invention will be further described with reference to the accompanying drawings in which:

FIG. 1 is perspective view of a power safety system (PSS) that is an electrical charging system that includes a charging station coupled to a charge coupler handle where the charge coupling handle contains a plurality of thermally-triggered electrical breaking arrangements (TTEBAs) according to the invention;

FIG. 2 is a plan view of the PSS of FIG. 1, showing TTEBA arrangement details thereof;

FIG. 3A is a partial cut-away view of a charge coupler handle of the PSS of FIG. 1 with an activator in a rest position;

FIG. 3B is a partial cut-away view of the charge coupler handle of the PSS of FIG. 1 with the activator in a first depress position;

FIG. 3C is a partial cut-away view of the charge coupler handle of the PSS of FIG. 1 with the activator in a second depress position;

FIG. 4 is a magnified view of an extending portion of a dual-mode push button of the charge coupler handle of FIG. 3C that includes a magnet;

FIG. 5 is an electrical circuit schematic diagram of a switch means of the charge coupler handle of the PSS of FIG. 2 that includes a hall-effect sensor;

FIG. 6 is a block diagram of a method to control electrical charge of the battery using the charge coupler handle of FIGS. 3A-3C;

FIGS. 7A-7C are truth tables showing operation states for elements associated with the switch means and the activator in the PSS of FIG. 2;

FIG. 8 is an electrical circuit schematic diagram of the switch means of a charge coupler handle that includes a reed switch according to an alternate embodiment of the invention;

FIG. 9 is a block diagram of a method to protect a human operator of the PSS of FIG. 1 from a thermal event;

FIG. 10 is a plan view of a PSS according to another alternate embodiment of the invention; and

FIG. 11 is a block diagram of a PSS that includes a primary and a secondary electrical charging system according to yet another alternate embodiment of the invention.

### DESCRIPTION OF THE PREFERRED EMBODIMENT

A drivetrain of a vehicle is defined as a group of components in the vehicle that generate power and deliver this power through the tires, or wheels of the vehicle to a road surface to move the vehicle along a road. A hybrid electric vehicle and/or an electrical vehicle each use a battery to power their respective drivetrains. A hybrid electrical vehicle uses a hydrocarbon fuel engine in combination with a battery disposed on the vehicle to power the hybrid vehicle's drivetrain. The drivetrain of the electric vehicle is powered solely by using energy from the electric vehicle's battery. The battery of the hybrid electric vehicle and the battery of the electric vehicle may respectively include a plurality of batteries connected in series or parallel electrical connection to form a single battery. As the vehicle is driven or otherwise used by a human operator of the vehicle such as when powering the radio or windshield wipers apart from powering the drivetrain, the electrical charge on the battery may decrease such that the battery needs to be electrically recharged back to a fully charged electrical state. Recharging a battery may be accomplished using a power safety system (PSS) that supplies electrical current to electrically charge and fill the battery with electrical charge in a similar manner to a fuel pump that pumps hydrocarbon fuel into a fuel tank to supply an engine that operates using hydrocarbon fuel. A portion of the PSS may be connected with the electric vehicle and another portion of the PSS may be connected to an electrical power source that effectively combine to allow the PSS to electrically charge the battery of the vehicle. As the human operator may need to handle portions of the PSS so that the PSS may electrically charge the battery of the vehicle, the PSS also includes a plurality of thermally-triggered electrical breaking arrangements (TTEBAs) that provide protection for the human operator and the PSS against undesired thermal events that may occur.

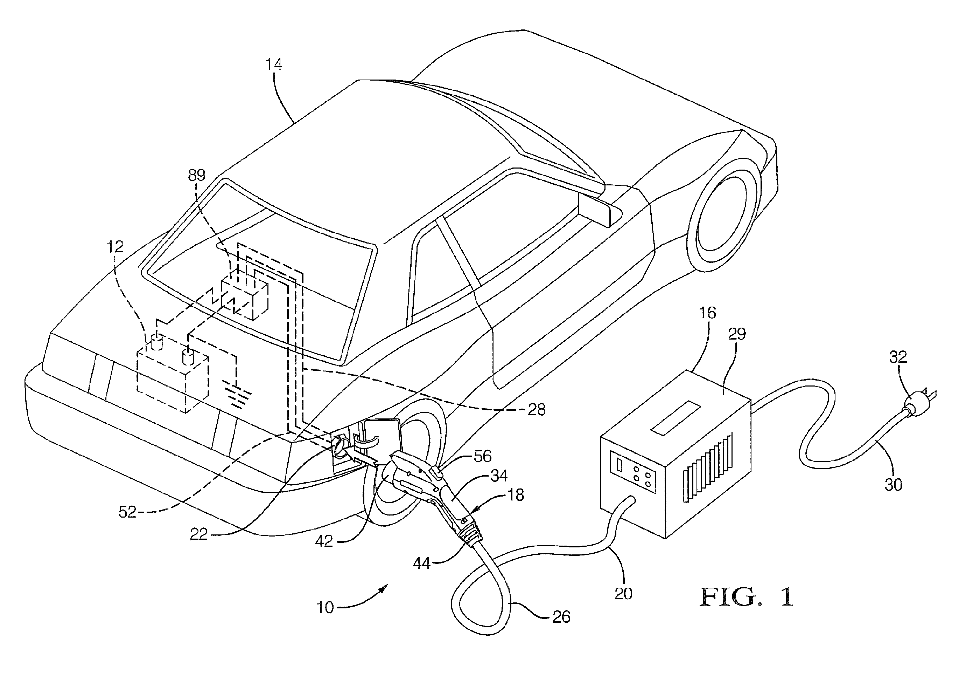

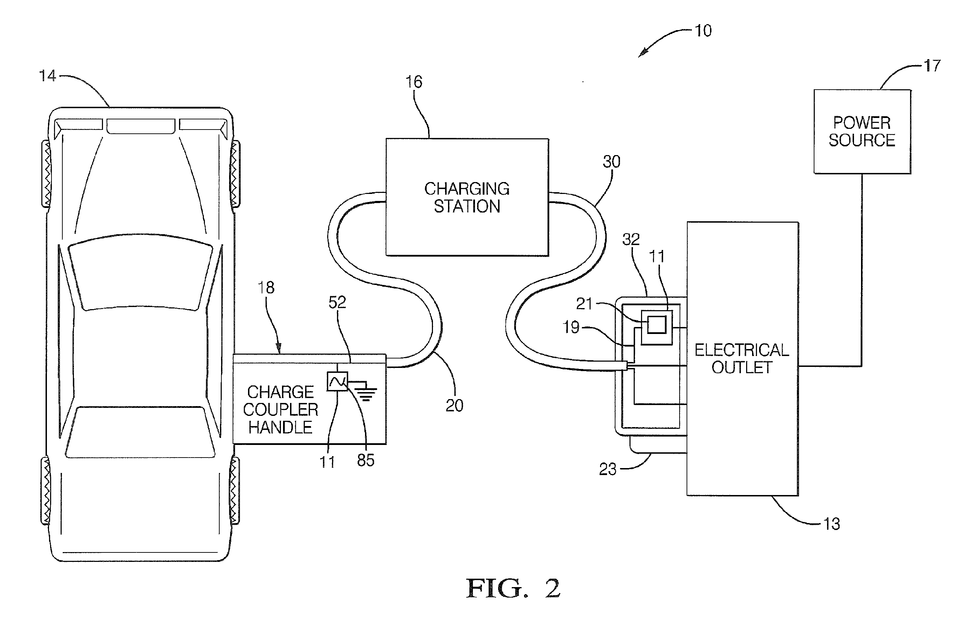

According to FIGS. 1, 2, and 5, a PSS 10 includes a plurality of thermally-triggered electrical breaking arrangements (TTEBAs) 11 that assist to protect a human operator (not shown) from one or more undesired thermal events. TTEBAs, when electrically activated, thermally trigger when a temperature at the TTEBA exceeds a predetermined threshold due to the thermal event. PSS 10 is an electrical charging system configured to electrically charge an energy storage device, or battery 12 of an electric vehicle 14. Alternately, the vehicle may any type of structure used to transport human beings, animals, building materials, or other items such as golf clubs. The vehicle may also encompass those found in the transportation industry such as automobiles, trucks, recreational vehicles, boats, planes, trains, golf carts, and the like. PSS 10 is constructed from any combination of electrical components as are used to form electronic circuitry, such as resistors, capacitors, inductors, diodes, integrated circuits (ICs), thermal cut-out devices, relays, power supply ICs, magnetic or inductive devices, microprocessors, microcomputers, switches, relays, and the like. The electrical components of PSS 10 may also be arranged on printed circuit boards to form the electronic circuitry. Alternately, the vehicle may be a hybrid electrical vehicle or any other type of vehicle or transportation arrangement where a battery needs to be electrically charged. PSS 10 includes an electrical charger unit, or charging station 16, a charge coupling, or coupler handle 18, a cord, or cable 20 that electrically links station 16 with handle 18, and a cord, or cable 30 that electrically links charging station 16 to a plug end, or plug 32. Cables 20, 30 respectively contain a plurality of wire conductors that carry electrical signals to/from charging station 16. PSS 10 is of a size suitable to package within electric vehicle 14 for storage when not used to electrically charge battery 12. For example, PSS 10 may be stored in a trunk or a vacant interior space of vehicle 14 so as to be portable with vehicle 14. PSS 10 may be removed from storage in vehicle 14 when battery 12 of vehicle 14 requires electrical charging of battery 12. When PSS 10 is used, PSS 10 may be used to electrically charge battery 12 back to a fully charged electrical state. When in use, as illustrated in FIG. 2, PSS 10 is configured to be disposed external to vehicle 14.

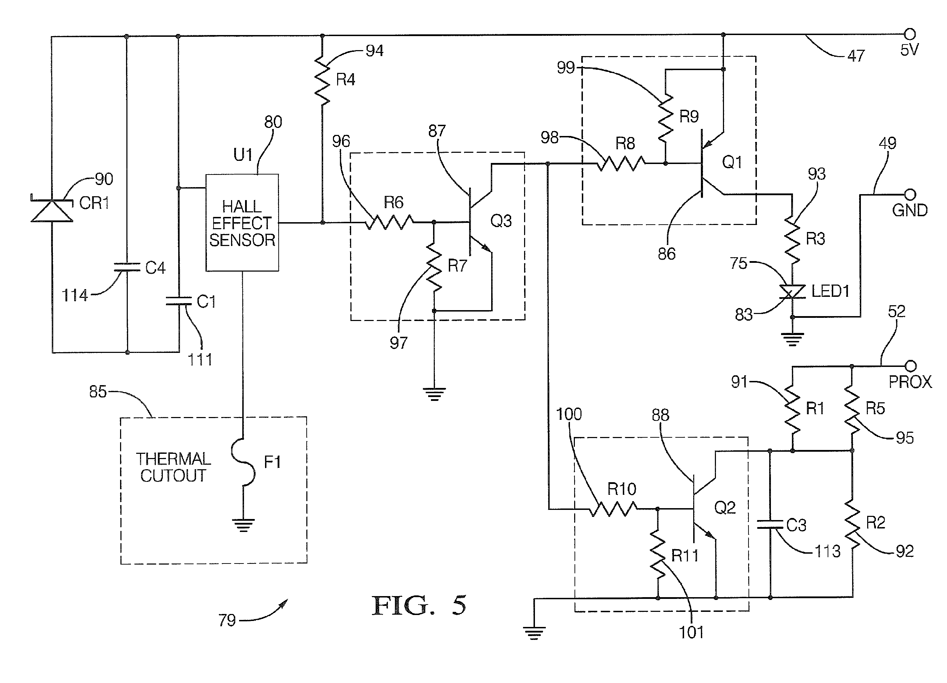

Plurality of TTEBAs 11 are associated with a plurality of electrical devices (EDs) 12, 13 disposed external to PSS 10. A first TTEBA in the plurality of TTEBAs 11 is disposed in handle 18 and is a thermal cutout device 85. Device 85 is a thermal fuse F1, as best illustrated in FIG. 5. A second TTEBA in the plurality of TTEBAs 11 is a second thermal fuse 21 disposed in plug 32. Plug 32 may be injection molded around fuse 21 being formed from a suitable plastic material. Plug 32 is releasably electrically connected, or coupled to an electrical outlet 13, as best illustrated FIG. 2. Alternately, one or more of the plurality of TTEBAs may be a thermistor device. Still yet alternately, at least one of the plurality of TTEBAs may be a thermal fuse and at least one of the plurality of TTEBAs may be a thermistor device. When plug 32 is electrically connected to outlet 13, PSS 10 is electrically operative. When PSS 10 is electrically operative, the plurality of TTEBAs 11 are also electrically operative. Plug 32 is disposed adjacent to outlet 13 when plug 32 is plugged in to outlet 13. The ED disposed external to PSS 10 and closer in proximity to handle 18 of PSS 10 is battery 12 disposed in vehicle 14 when handle 18 is coupled to vehicle inlet connector 22, as best illustrated in FIG. 1. An ED proximate to plug 32 external to PSS 10 is electrical outlet 13 in communication with a power source (PS) 17, as best illustrated in FIG. 2. In some embodiments, for example, a distance of more than 100 centimeters may separate electrical outlet 13 when plug 32 is connected thereto and handle 18 when coupled to vehicle 14. Electrical outlet 13 may be found in a garage of a home residence, an office building's parking garage or an outdoor parking lot, or any location that fits a vehicle that needs to be electrically charged. Alternately, the electrical outlet may be similarly disposed in any location suitable to electrically charge battery 12 of vehicle 14. Electrical outlet 13 is in electrical communication with PS 17 so as to be an extension of PS 17. PS 17 supplies an alternating current (AC) voltage that is available to PSS 10 at electrical outlet 13. PS 17, for instance, may be an electrical power generator that supplies electrical energy or a local power grid operated by an electrical power company. As illustrated in FIG. 2, PS 17 provides an AC voltage that is 120 V_{AC} at outlet 13. Thus, charging station 16 is configured to receive a potentially high current signal carried on an electrical power connection (EPC) 19 when plug 32 is coupled to electrical outlet 13. Alternately, the PS may supply a voltage greater than 120 V_{AC}, such as a voltage value of 240 V_{AC}. Still yet alternately, the PS may be any voltage value effective to electrically charge the battery.

PSS 10 further includes more than one, or a plurality of electrical power connections (EPCs) 19, 52 associated with plurality of TTEBAs 11. In a general sense, EPCs 19, 52 are electrical connections configured as electrical conduits to operatively power or provide received electric current in to, or electrically transmitted out from PSS 10 from/to EDs 12, 13 disposed external to PSS 10. EPC 19 supplies electrical current to PSS 10 to electrically operate PSS 10 from ED 13. Without a power signal carried on EPC 19, PSS 10 would not electrically operate. EPC 52 supplies battery 12 with electrical current supplied by PSS 10 through handle 18 to electrically charge battery 12. A portion of the electrical current supplied through EPC 19 is used to electrically operate charging station 16 and another portion of electrical current supplied through EPC 19 is carried through EPC 52 to electrically charge battery 12 within vehicle 14.

When plug 32 is coupled to electrical outlet 13 so that at least one TTEBA in the plurality of TTEBAs 11 is electrically operative, and at least one thermal event occurs that is sufficient to thermally activate the at least one of these electrically operative TTEBAs, the respective EPC 19, 52 associated with the at least one thermally activated TTEBA is electrically broken. When an EPC is electrically broken, no electrical current is carried through the power connection associated with that EPC. Plug member 32 includes a status indicator (SI) 23 that corresponds with an electrical state of fuse 21 of plug 32. SI 23 exhibits a visual or audible change-of-state indication if power connection 19 is electrically broken due to a thermal event at electrical outlet 13. SI 23 is perceivable by a sense organ of the human operator of PSS 10. For example, an SI may be a light emitting diode (LED) or an audible frequency producing device. SI 23 changes state when the state of the TTEBA changes. SI 23 is attached to plug 32. Alternately, at least a portion of the LED or audio device may be directly disposed in plug 32. If SI 23 is an LED, the LED is perceivable by the eyes of the human operator. In one embodiment, the LED may emit green light when the TTEBA is electrically operative and emit red light when the TTEBA is thermally activated. If SI 23 is an audible status indicator, the audible status indicatior is perceivable by the ears of the human operator when the TTEBA is thermally activated. Alternately, an SI may be associated with a specific TTEBA for one or more of the TTEBAs in the plurality of TTEBAs. Still yet alternately, the SI may be any device capable and/or method used to alert the human operator of the status of the TTEBA. One such alert, for example, may be through a visual display as seen by the eyes of the human operator disposed on the charging station.

Referring to FIG. 2, a thermal event may occur at an electrical and mechanical interface of handle 18 and vehicle inlet connector 22 that may affect TTEBA 11 disposed in handle 18. A different thermal event may occur at electrical outlet 13 that affects TTEBA 11 disposed in plug 32. Alternately, the same thermal event may affect the TTEBAs respectively disposed in handle 18 and plug 32. One type of thermal event may be an overcurrent condition that exhibits at vehicle inlet connector 32 when handle 18 is coupled thereto and/or at electrical outlet 13. Another type of thermal event may be an undesired fire that occurs at these respective locations 13, 22.

Referring back to FIG. 1, handle 18 is configured for coupling to a vehicle inlet receptacle, connection, or connector 22 disposed on vehicle 14 by the human operator. Electrical charge, or current passes from PSS 10 through inlet connector 22 to electrically charge battery 12. Inlet connection 22 is disposed at a rear exterior portion of vehicle 14 at a height suitable to allow handle 18 to be easily mated to inlet connector 22. Alternately, the vehicle inlet connection may be disposed at any interior or exterior location on the vehicle. Locating the vehicle inlet connection away from a rear portion of the electric vehicle may assist vehicle operators and other consumers to identify the vehicle as an electric vehicle in contrast to a vehicle that operates on hydrocarbon fuel that has typically and historically been fueled in the rear portion of the vehicle.

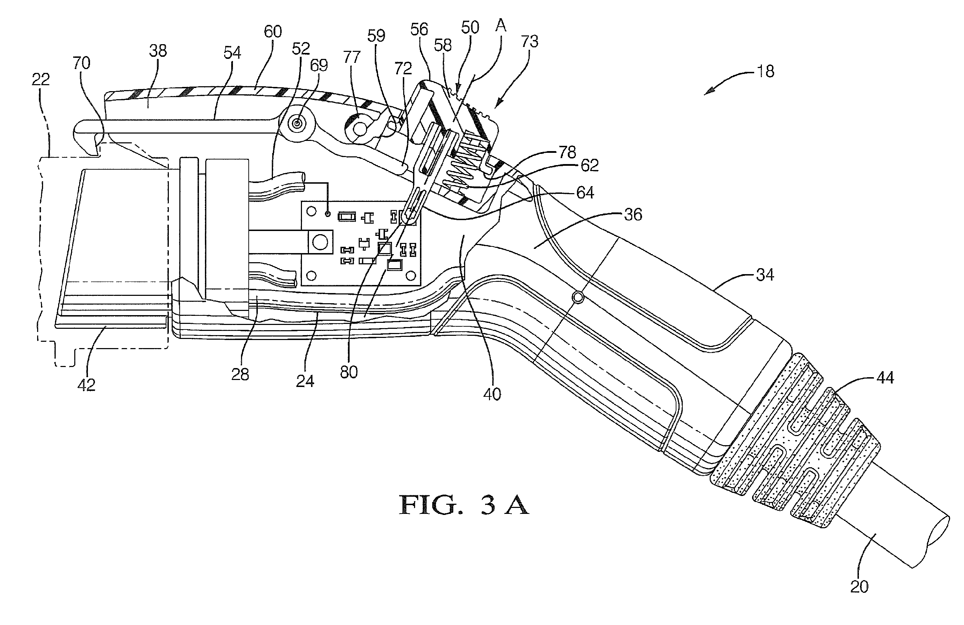

Referring to FIGS. 1 and 3A-3C, handle 18 contains one or more wire conductors 24 that may provide uni-directional or bi-directional flow of electrical signals between handle 18 and vehicle 14. Some of the conductors 24 are routed through cable 20 to charger 16. At least one of the wire conductors 28 in handle 18 is power connection 52 that carries the electrical current to electrically charge battery 12 of vehicle 14. Wire conductors routed in cable 20 may be enclosed with an insulative, protective outer cover 26. For example, the insulative outer cover may be formed of a plastic sheath or formed using electrical tape wound about the wire conductors. Wire conductors 28 carrying power signals are sufficiently sized to carry a current or voltage load to effectively charge battery 12 of vehicle 14. In one embodiment, two wire conductors carrying power signals are routed through cable 20 and handle 18 into vehicle 14. Other wire conductors in cable 20 routed through handle 18 may carry electrical control signals that communicate between charging station 16 and a charge controller 89 to facilitate electrical charging of battery 12. For example, one such control signal is a pilot signal that the controller uses to handshake, and communicate with the charging station. Controller 89 manages the electrical charging of battery 12. Controller 89 receives current through the wire conductors 28 carrying power signals from handle 18 and may select to not transmit these signals to battery 12. Controller 89 may further process, or filter these power signals before supplying the filtered power signals to battery 12. Alternately, the vehicle may use other vehicle-side electrical circuit configurations and charge controller types that are effective to supply the electrical energy from the one or more power signals using the other control signals routed through the charge couple handle to the power station to electrically charge the battery of the vehicle. These other configurations are left for contemplation by the artesian.

Charging station 16 includes a housing 29. Housing 29 may be constructed of solid material such as metal or plastic. Electrical circuits that form the at least one power signals carried on wire conductors 28 in cable 20 are disposed in housing 29 and receive the voltage and/or the current from PS 17. Referring to FIG. 2, station 16 receives power from PS 17 into housing 29 through an electrical cord 30 coupled with outlet 13. A plug end 32 of cord 30 is received by a 120 V_{AC} receptacle outlet. This voltage level is typical of what may be found when connected to an AC electrical outlet in a garage of a vehicle owner in the United States. Alternately, the charging station may have a power source with 240 V_{AC}. Using a charging station that is powered by a power source of 240 V_{AC} provides more current or voltage load to charge a battery that results in charging, or recharging a battery in a less amount of time than PSS 10 that uses a power source of 120 V_{AC}. Alternately, a battery charging station may be provided that requires connection to a power source that is a voltage level other than 120 or 240 V_{AC} including power sources that operate on direct current (DC).

Handle 18 includes a body 34 formed from a left portion 36 and a right portion 38. Portions 36, 38 are mateable together, and when assembled together, define a space, or passage 40 through handle 18. Portions are 36, 38 are formed of a molded material such as plastic. Preferably, handle 18 is formed of a flame retardant material that may be approved and listed by Underwriters Laboratory (UL). Alternately, the body of the charge coupling handle may be integrally formed. Portions 36, 38 may be fastened together with fasteners such as screws, rivets, an adhesive, and the like. In another embodiment, seven screws attach the left and the right portion together.

Referring to FIG. 3A-3C, handle 18 includes a handle connector 42. Handle connector 42 is attached to one end of handle 18 adjacent passage 40. Handle connector 42 is suitable to mate with vehicle inlet connector 22 which receives handle connector 42. Handle connector 42 is a male connector and vehicle inlet connector 42 is a corresponding female connector 22. Alternately, the connections means may be a female connector and vehicle inlet connector be a male connector. Preferably, handle connector 42 is formed of a connecter that is a SAE J-1772 approved connector. Alternately, the handle connector may be of any type connector that has a corresponding mating vehicle inlet connector that is attachable to the body of the handle. As previously described herein, charge couple handle 18 is electrically tethered to station 16 by cable 20. Wire conductors 24 are received in passage 40 at another end of handle 18 remote from handle connector 42. Wire conductors 28 carrying power signals are routed through passage 40 and received into handle connector 42. Handle connector 42 and passage 40 are suitable to route any electrical signal through wire conductors 24 in handle 18 needed to charge battery 12 of vehicle 14. A grommet 44 is attached to an end of handle 18 that receives cable 20. Grommet 44 is effective to provide strain relief for cable 20 into handle 18. Preferably, grommet 44 and handle connector 42 are secured in body 34 when portions 36, 38 are joined together.

Handle 18 mechanically and electrically couples and decouples charging station 16 with vehicle 14. Handle 18 includes a non-contact electrical switch means 48 and a mechanical latch 54 that are operatively associated with an activator 50. Switch means 48 is disposed on a printed circuit board (PCB) 81 in handle 18 and includes a wire conductor that serves as an electrical output for switch means 48, or an electrical connection 52 that communicates with handle connector 42 to vehicle 14 when handle connector 42 is connected to vehicle inlet connector 22. Mechanical latch 54 securely mechanically locks handle 18 to vehicle 14 passively when handle 18 is manually attached to vehicle 14 by a human operator between vehicle 14 and charger 16. Activator 50 in combination with switch means 48 is adapted to alter the resistance state of electrical connection 52 between a high and a low resistance state. Preferably, the high resistance state is about 480 ohms and the low resistance state is about 150 ohms. Electrical connection 52 is provided a 5 V_{DC} supply voltage through vehicle 14 when handle connector 42 of handle 18 is connected to vehicle inlet connector 22. Alternately, a different level of supply voltage may be utilized. Actuator 50 is movable by the operator from a deactivated state 73 to a first and a second position activated state 74, 76 and mechanical latch 54 operates independently of the state of actuator 50 when handle 18 is being manually attached to inlet connector 22 but being mechanically released from inlet connector 22 by actuator 50 when it is moved to its second activated state 76. Switch means 48 is associated with actuator 50 to break electrical connection 52, or put electrical connection 52 in a high resistance state, when actuator 50 is moved to first position activated state 74 before releasing mechanical latch 54 at second activated position 76. Electrical connection 52 is still physically electrically connected to inlet connector 22, but electrical connection is broken by being altered to a high resistance state. In this manner, switch means 48 combines with activator 50 to affect a resistance state of electrical connection 52 to vehicle 14 when handle 18 is connected to vehicle 14, and vehicle 14 responds back to PSS 10 so that PSS 10 electrically manages, or controls the flow of electrical current through wire conductors 28 carrying power signals in handle 18 and into vehicle 14 to allow electrical charging of battery 14 apart from independently mechanically managing a connection state of handle connector 42 in communication to vehicle inlet connector 22. Unplugging of electrical connection 52 from vehicle inlet connection 22 may not easily occur until electrical connection 52 is electrically broken, or in a high resistance state as seen by controller 89 of vehicle 14.

Referring to FIGS. 3A-3C, activator 50 is a momentary dual-activation push button 56. Momentary is defined as lasting for the moment the push-button is actually depressed. Push button 56 is disposed along a longitudinal axis A as best illustrated in FIG. 3A. Push button 56 is mounted to body 34 of handle 18 so that a head portion 58 of push-button 56 is accessible to a human operator (not shown) of handle 18. Push button 56 is fitted into an aperture 59 in handle 18. Flanges 57 surround the aperture 59 so that flanges 57 provide an interference fit for push button 56 in combination with a force supplied by biasing means, or spring 62. Spring 62 is effective to automatically move actuator 50 back to its deactivated state when released by the human operator. Preferably, handle 18 is ergonomically designed so as to be grasped with a hand of the operator of PSS 10. One such handle is described in United States Application Serial Number 29/376,111 and is incorporated by reference herein. Alternately, push-button portion may be disposed anywhere along the external surface of handle 18.

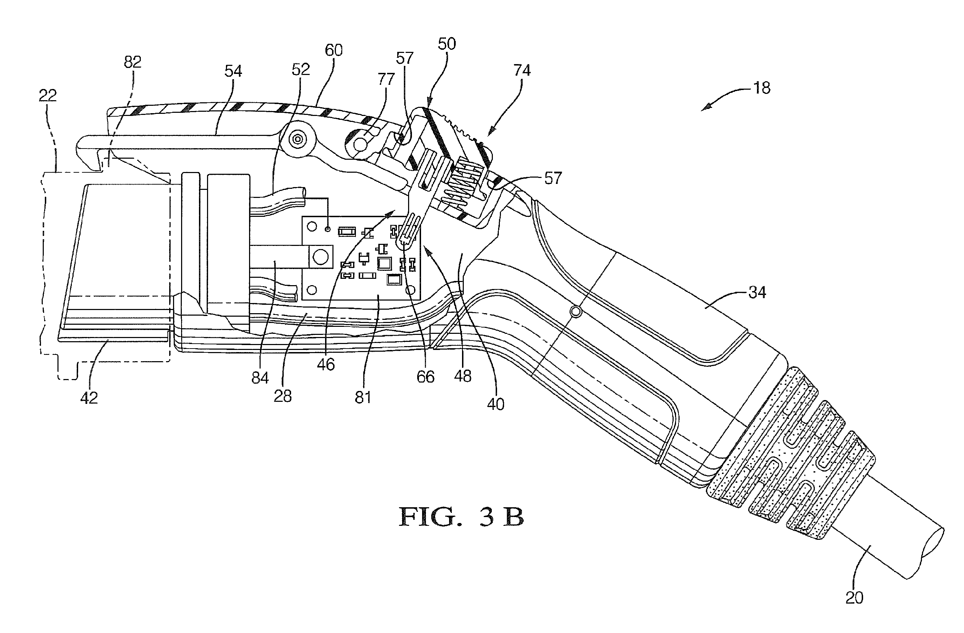

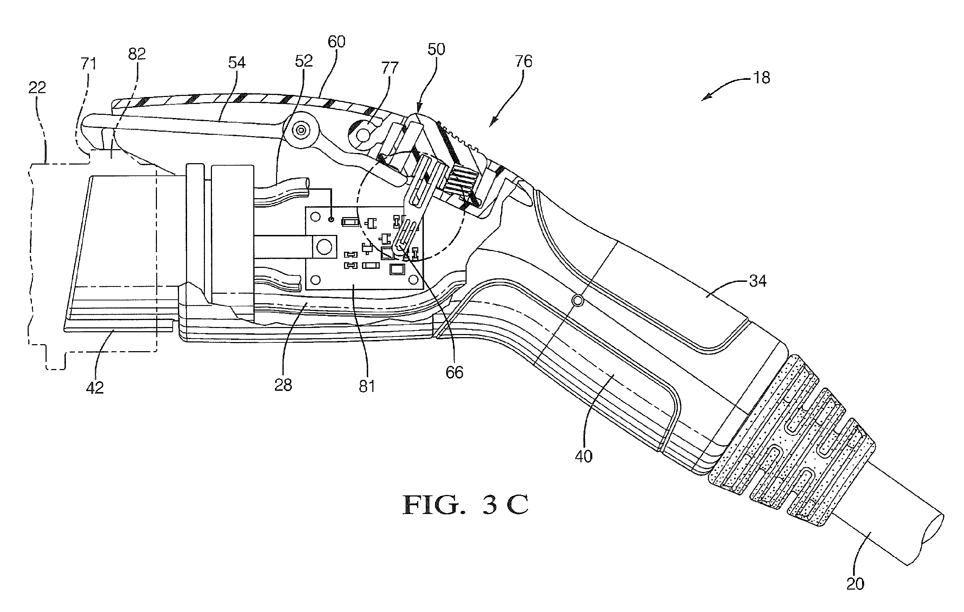

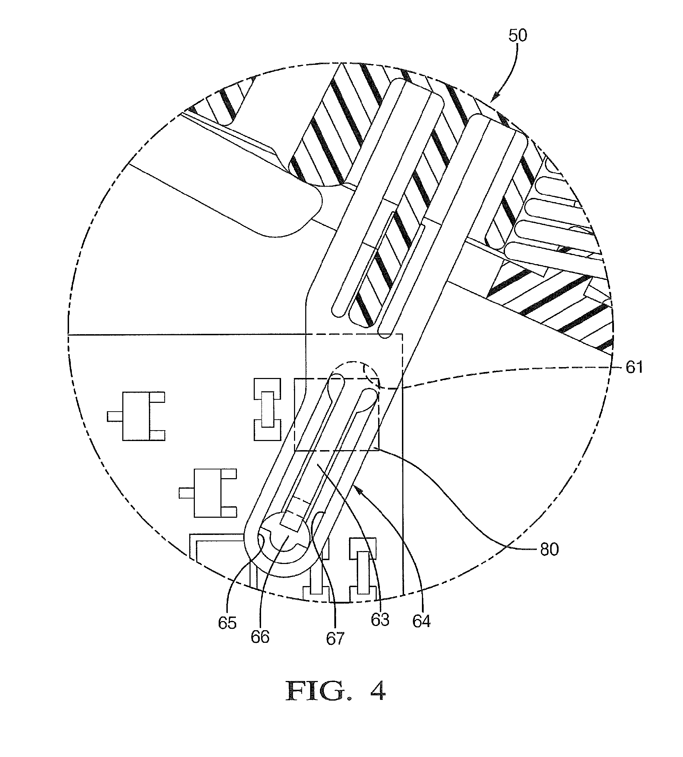

Spring 62 bias head portion 58 and an extending portion 64 that depends axially away from head portion 58 adjacent spring 62. Push button 56 is constructed of a rigid, dielectric material such as plastic. Extending portion 64 includes a magnet 66 that is secured in extending portion 64. Preferably, magnet 66 is cylindrical. Referring to FIG. 4, magnet 66 is secured in extending portion 64 that includes a magnet retainer 67. Magnet retainer 67 receives magnet 66 at a start position 61 being installed with a tool (not shown) that allows placement of magnet 66 into start position 61 of retainer 67 so that magnet 66 is urged to slide down a ramp 63 using the tool into a locked position 65 in retainer 67. The tool used to install the magnet may be similar to a terminal pick having a pointed end having a custom form used to capture magnet 66 on its cylindrical axis and prevents magnet 66 from tipping over during installation in retainer 67. When head portion 58 is in a rest position as best illustrated in FIG. 3A, magnet 66 is proximate and overlying switch means 48. Extending portion 64 moves in a forward axial direction of axis A toward passage 40 when head portion 58 is depressed by the operator. Correspondingly, referring to FIGS. 3B and 3C, magnet 66 travels to move away from switch means 48. Extending portion 64 moves in a rearward axial direction of axis A away and outwardly from passage 40 when push-button portion is released by the operator.

The deactivation position, or rest position of push button 56, is best illustrated in FIG. 3A. Rest position 73 of push button 56 occurs when push button 56 is not pressed, or depressed by the operator of handle 18. Magnet 66 in rest position 73 of head portion 58 supplies magnetic flux to switch means 48. Spring 62 provides bias to push button 56 to position head portion 58 above external surface 60 of handle 18. A first mode of push button 56 is push button 56 being activated, or depressed in an axial first travel direction by the operator to first position activated state, or first depress position 74 as best illustrated in FIG. 3B. First depress position 74 is also a partial depress position for push button 56. First depress position 74 axially submerges a section of head portion 58 below external surface 60. Magnet 66 is moved remotely from being over switch means 48 in first depress position 74. For example, the first travel direction of head portion 58 to the first depress position 74 from rest position 73 may be a distance of 6 millimeters from rest position 71 of push button 56. A second mode of push button 56 is push button 56 being activated, or depressed in an axial second travel direction further from the first travel direction by the operator to a second position activation state, or a second depress position 76 as best illustrated in FIG. 3C. Second depress position 76 is a complete depress position of push button 56. Magnet 66 in second rest position 76 of head portion 58 is moved even more remotely from being over switch means 48 from rest position 73 and also is further remote from first depress position 74. Second depress position 76 axially substantially submerges head portion 58 below external surface 60 so that a surface of head portion 58 is about level with external surface 60. For example, a distance of the second travel direction may be 9 millimeters to second rest position 76 from rest position 71 of push button 56. Second depress position 76 has a length of travel along axis A that is greater than a length of travel of first depress position 74 where the second travel direction is greater than the first travel direction. A force provided by spring 62 moves head portion 58 back to a rest position from first depress position 74 or a second depress position 76.

Mechanical latch 54 of handle 18 includes a hook portion 70 and an engaging portion 72 opposite hook portion 70 that engages with push button 56. Latch 54 may be made of any solid material, such as metal or wood. Preferably, latch 54 is made of a dielectric material that is a plastic material. Latch 54 is disposed in passage 40 in handle 18 being secured to handle 18 with a fastener 69. Fastener 69 may be a screw or rivet, and the like. Latch 54 is also disposed in a rest position to engage a boss 77 in handle 18. Latch 54 is in a neutral, or rest position when push button 56 does not engage latch 54 as best illustrated in FIGS. 3A and 3B. Boss 77 provides a resting point for a portion of latch 54 nearest push button 56 when latch is not engaged by head portion 58. Boss 77 also provides an anchor to stabilize latch 54 when latch 54 communicates with nib 82 of vehicle inlet connector 22 when handle 18 is connected to vehicle inlet connector 22. Depression of push button 56 into second depress position 76 engages a bottom surface 78 of head portion 58 adjacent extending portion 64 against latch 54 so as to move hook portion 70 away from a shoulder 71 on vehicle inlet connector 22 so that handle connector 42 is removeable, or releaseable from vehicle inlet connector 22.

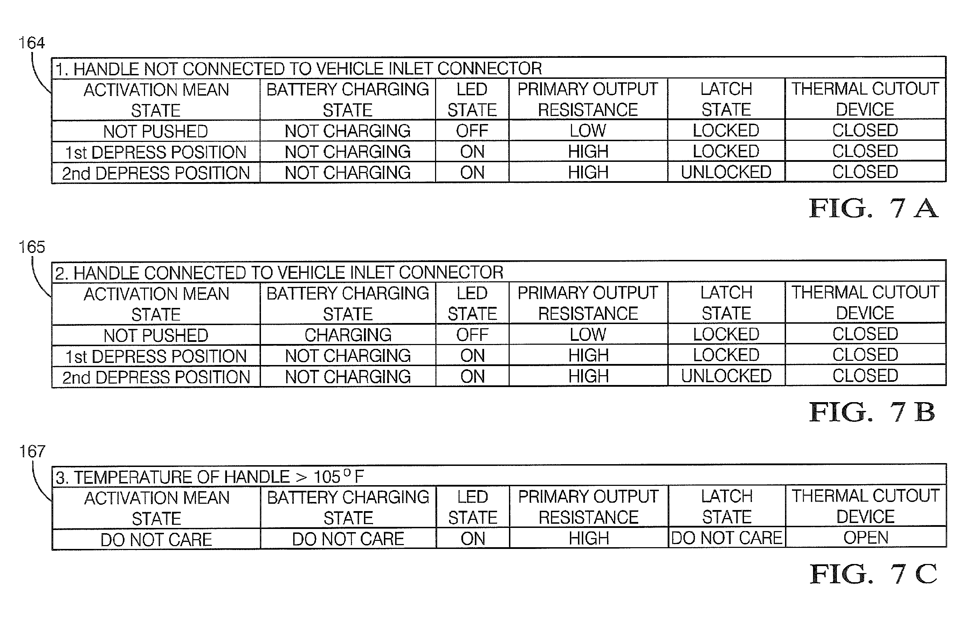

Referring to FIGS. 3B and 5, switch means 48 includes an electrical circuit 79 including a hall-effect sensor 80. Switch means 48 and hall-effect sensor 80 operate according to the truth table shown in FIGS. 7A-C. The primary output resistance shows the resistance states of electrical connection 52 as shown in FIGS. 5 and 7A-7C, and is the resistance as measured between electrical connection 52 and ground when looking into electrical connection 52 from vehicle 14. Hall-effect sensor 80 is disposed in an integrated circuit package that is mounted on PCB 81 along with associated other circuitry to produce electrical connection 52. The associated other circuitry on PCB 81 may include resistors, capacitors, inductors, diodes, and the like. The hall-effect sensor 80 and other associated circuitry may be attached to PCB 81 by soldering. PCB 81 is disposed in passage 40 of handle 18. PCB 81 may be secured to handle 18 in passage 40 using any suitable fastener. Preferably, circuit board 18 is secured in passage 40 of handle 18 using screws. Hall-effect sensor 80 (U1) is positioned on circuit board 81 and circuit board 81 has an orientation in passage 34 so that hall-effect sensor 80 (U1) proximate to magnet 66 on push button 56 that overlies hall-effect sensor 80 (U1) when push button 56 is in rest position 71 as best shown in FIG. 3A. When magnet 66 overlies hall-effect sensor 80 (U1) a sufficient amount of magnetic flux radiates into sensor 80 that results in proximity output, or electrical connection 52 having a first output state when handle connector 42 is mated with vehicle inlet connector 22. A suitable hall-effect sensor is commercially available from Allegro Microsystems, Incorporated under the trade designation Omnipolar Hall-Effect Digital Switches. A DC voltage power line 47 is supplied by charging station 16 to PCB 81 of handle 18 to operate circuit 79 and supply voltage to power hall-effect sensor 80 and a lamp 75. Lamp 75 may need to operate even if handle 18 is not connected to vehicle inlet connection 22. DC voltage power line 47 may be a 5 V_{DC} electrical signal. Alternately, the DC voltage power line may have a voltage level different from 5 V_{DC}. Circuit 79 is grounded to charging station 16 through ground 49. Ground 49 may be connected with the battery charging system and the battery charging system ground may be an earth ground. Alternately, the grounds between the charging system and the vehicle may have a common ground being the chassis ground of the vehicle. The chassis ground may be earth ground.

Lamp 75 is useful to provide light that emits through passage 40 and out from an aperture (not shown) in connecter means 42 in handle 18 to illuminate a dark environment to locate vehicle inlet connector 22. Lamp 75 is a light emitting diode 83 (LED1). Alternately, lamp 75 may be any element or device that emits light such as an incandescent bulb. A light pipe 84 focuses and transmits the light provided by diode 83 (LED1) thru passage 40 and out aperture in handle 18. Light pipe 84 may be secured in passage 40 by any suitable fastener, such as adhesive. Alternately, the lamp may not be employed in the handle.

A thermal cutout device 85 (F1) is disposed on PCB 81 in handle 18 and is suitable to sense if an over-temperature condition exists at least in handle 18 which encompasses an environment about thermal device 85. This environment may further extend out to include vehicle inlet connection 22 when charge couple handle 18 is connected with vehicle inlet connection 22. For example, an over-temperature condition may be experienced if a hot thermal failure develops in the handle when the handle is connected to vehicle inlet connector 22. If thermal device 85 (F1) is activated due to an over-temperature event, device 85 determines the output state of electrical connection 52 as shown in truth table 167 in FIG. 7C. Device 85 cuts out, or opens to determine the primary output resistance of electrical connection 52 to a high resistance state so controller 89 of vehicle 14 stops transmission of power signals 28 through handle 18. Advantageously, this feature may prevent handle 18 from becoming undesirably hot, emit a burning odor, or becoming deformed due to the over-temperature condition. Preferably, device 85 is tripped, or activated to be cut-out when a temperature sensed by thermal device 85 exceeds 105 degrees Celsius (°C) ±5°C. A suitable thermal shutdown device is commercially available from Cantherm under the trade designation Thermal Cutouts. If the over-temperature condition is induced due to a vehicle side thermal failure, thermal device 85 is resettable to allow handle 18 of PSS 10 to recover from the vehicle-induced thermal failure. For example, device 85 is recoverable when the temperature of device 85 is sensed to be about 70 °C, which is about 35 °C below the 105 °C threshold. Preferably, thermal device 85 is strategically positioned in handle 18 intermediate two power signals 28 disposed within handle 18. Thermal device 85 is configured to be in physical contact with the wire insulation of both wire conductors 28 carrying power signals to achieve the best response time in sensing an over-temperature condition permeating through the wire conductors 28 carrying power signals. Alternately, the thermal cutout device may not be employed in the handle.

When handle connector 42 of handle 18 is not connected with vehicle inlet connector 22, charging of battery 12 of vehicle 14 will not occur. Referring to FIG. 7A-7C, reference numeral 164 shows various states of operation associated with switch means 48 in combination with activator 50 when handle 18 is not connected to vehicle inlet connector 22. If head portion 58 of push button 56 is depressed by the operator to at least first depress position 74, LED 83 emits light through the aperture in handle 18 to provide light in a darkened environment to locate vehicle inlet connection 22. LED 83 will stay on when head portion 58 is depressed past first depress position 74 and also stays on when in second depress position 76. The other operation states operate as shown in reference numeral 164, but are irrelevant as handle 18 is not connected to vehicle inlet connection 22.

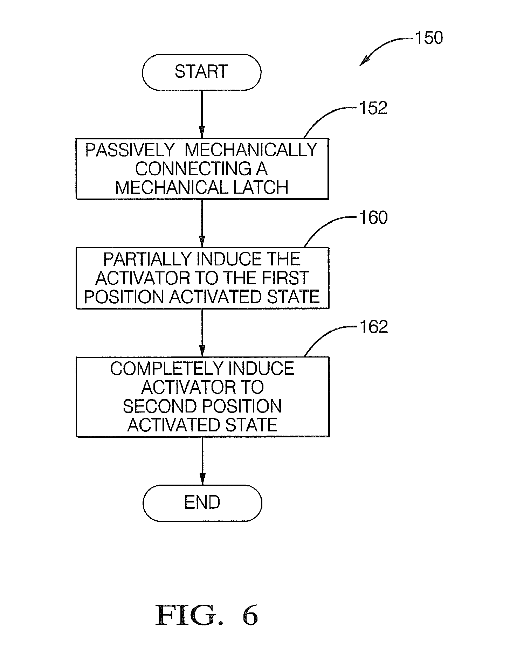

Referring to FIGS. 3A-3C, 7A-7C, when station 16 is connected to the 120 V_{AC} power source 17, and handle connector 42 is connected to vehicle inlet connector 22, and head portion 58 is in rest position 71, charging of battery 12 of vehicle 14 may commence. Referring to FIG. 6, method 150 is presented to control electrical charging of battery 12 and reference numeral 165 shows the various states associated with switch means 48 in combination with activator 50 when handle 18 is being mated to vehicle inlet connection 22. One step 152 in method 100 is to connect handle 18 to vehicle inlet connector 22 that passively connects mechanical latch 54 with vehicle inlet connector 22. The operator of PSS 10 grasps handle 18 and moves handle 18 towards inlet connector 22. When inlet connector 22 is located by the operator, handle connector 42 of handle 18 is mated to vehicle inlet connector 22. Hook portion 70 of mechanical latch 54 rides over nib 82 with insertion of handle connector 42 to engage shoulder 71 of inlet connector 22. Nib 82 includes a ramp portion that transitions into the outer surface of inlet connector 22. Engagement of hook portion 70 against shoulder 71 prevents inadvertent removal of handle 18 from inlet connector 22. This secures latch 54 to vehicle inlet connection 22 in a locked state. When handle 18 is mated to vehicle inlet connection 22 the supply voltage for electrical connection 52 is provided by vehicle 14. Terminals (not shown) in handle connector 42 are in electrical communication with corresponding terminals (not shown) in vehicle inlet connection 22 before hook portion 70 engages shoulder 71. For example, the hook portion may engage the shoulder after about 1 millimeter of travel past where the terminals of the handle connector and the terminals of the vehicle inlet connectors are connected. When handle connector 42 is electrically connected with vehicle inlet connection 22, wire conductors 28, 52 carrying power signals are provided for transmission through handle 18 to electrically charge battery 12 on vehicle 14.

When handle 18 is mated to inlet connection 22 and head portion 58 is in rest position 71 and push button 54 is not depressed, electrical connection 52 is at a low resistance state looking into electrical connection 52 as seen by vehicle 14. Magnet 66 is overlying hall-effect sensor 80 supplying magnetic flux to hall-effect sensor 80 to ensure circuit 79 keeps electrical connection 52 in a low resistance state. When controller 89 of vehicle 14 senses the low resistance state of electrical connection 52, controller 89 communicates with PSS 10 to transmit at least one power signal on wire conductor 28 through handle 18 to electrically charge battery 12 in vehicle 14.

When the operator desires to disconnect PSS 10 by uncoupling handle 18 from vehicle inlet connector 22, the operator depresses head portion 58 of push button 56 to second depress position 76 which is step 162 in method 150. This may occur, for example, when battery 12 has been completely electrically charged and has a full electrical charge. When battery 12 has a full electrical charge, PSS 10 is no longer needed. Second depress position 76 cannot be attained until dual-mode push button is induced, or moved initially through first depress position 74. The depression of head portion 58 to first depress position 74 is defined as a partial depress of head portion 58, as captured in step 160 of method 150. The depression of head portion 58 to second depress position 76 is defined as a complete depress of head portion 58. When head portion 58 is induced to first depress position 74, magnet 66 travels away from hall-effect sensor 80. Magnetic flux no longer influences hall-effect sensor 80 and the performance of circuit 79 operates to change the electrical state of electrical connection 52 to a high resistance state. Controller 89 in vehicle 14 senses the high resistance state of electrical connection 52 and configures system 10 to stop transmission of one or more power signals 28 through handle 18. When wire conductors 28, 52 carrying power signals are not transmitted, battery 12 is not being electrically charged. In first depress position 74, latch 54 is still in the locked state and handle 18 is not releasable from vehicle inlet connection 22. When head portion 58 is depressed to second depress position 76, surface 78 of head portion 58 engages latch 54 to move latch 54 to a position that is outwardly away from shoulder 71 of vehicle inlet connector 22 so that hook portion 70 of latch 54 is clear of shoulder 71. When latch 54 is clear of shoulder 71, handle connector 42 of handle 18 may be removeably uncoupled from vehicle inlet connection 22. Thus, the transmission of power signals on wire conductors 28, which is defined as a hot signal, is stopped before handle connector 42 of handle 18 is removeable from vehicle inlet connector 22 to prevent handle 18 from being removed while battery 12 is still being charged. This feature enhances the safety to the operator that uses PSS 10. If the battery continued to be electrically charged while the handle is also being disconnected from the vehicle inlet connection, undesired electrical arcing across the terminals of the handle connector and vehicle inlet connection may result which may degrade these connections. Arcing may degrade these connections by causing material of terminals in these connections to break away resulting in high impedance in the connection which lowers the effective electrical conductivity in the connection.

Referring to FIGS. 5 and 7A-7C, and turning our attention to the operation of circuit 79, switch means 48 includes hall-effect sensor 80 (U1) that has four modes of circuit operation when handle connector 42 is mated to vehicle inlet connector 22. A first operation state occurs when head portion 58 of push button 56 is in rest position 71, or not depressed and thermal device 85 (F1) does not sense an over-temperature condition in handle 18. A second operation state occurs when head portion 58 is depressed to first depress position 74 and thermal device 85 (F1) does not sense an over-temperature condition. A third operation state occurs when head portion 58 is depressed to second depress condition 76. A forth operation mode occurs when thermal device 85 (F1) senses an over-temperature condition in handle 18.

Referring to FIG. 5, thermal device 85 (F1) is electrically connected to hall-effect sensor 80 (U1) and diode 83 (LED1) is in electrical communication with hall-effect sensor 80 (U1) through electronic transistor devices 86 (Q1), 87 (Q3). Transistor 86 (Q1) provides the necessary current to operate diode 83 (LED1) when transistor 86 (Q1) is turned on. Transistor 87 (Q3) provides a buffer between the output of hall-effect sensor 80 (U1) and transistor driver 87 (Q3). Electrical switching device, or transistor device 88 (Q2) is in electrical communication with hall-effect sensor 80 (U1) and with inlet connector 22 through PROX line, or electrical connection 52, to controller 89 in vehicle 14. Voltage suppressor 90 (TVS 1) is used to protect hall-effect sensor 80 (U1) from transient voltages that could be coupled onto the 5 V_{DC} supply line by limiting the maximum voltage that may be applied to hall-effect sensor 80 (U1). Resistors 91-101 are used to provide proper biasing levels for respective transistors 86-88 (Q1-Q3). Capacitors 111, 113-114 provide additional electrical filtering for electrical signals in circuit 79.

### First Circuit Operation State - Hall-effect Sensor

As previously described herein, the first state of operation using hall-effect sensor 80 (U1) is where thermal device 85 (F1) does not sense an over-temperature condition and head portion 58 of push button 56 is in rest position 71. Referring to FIGS. 3A, 5, and 6, the first operation state includes electrical connection 52 (prox) being in a low resistive state. The low resistance state is attained when head portion 58 is in the rest position regardless of whether handle 18 is connected or not connected to vehicle inlet connection 22. Referring now to FIG. 3A, head portion 58 is not depressed so that magnet 66 is centered over hall-effect sensor 80 (U1). A threshold of magnet flux supplied to sensor 80 (U1) ensures an output of hall-effect sensor 80 (U1) electrically connecting with transistor 87 (Q3) is at a low resistance state. This low resistance state is output to transistor 86 (Q1) turns transistor 87 (Q1) off which subsequently turns off transistor 87 (Q3). With transistors 86 (Q1), 87 (Q3) turned off, each transistor device has an open collector output. With transistor 87 (Q3) being turned off, diode 83 (LED1) is also turned off so no light emits from diode 83 (LED1) through aperture of handle connector 42 and out of handle 18. With transistors 86 (Q1) and 87 (Q3) being turned off, and the collector of transistor 87 (Q3) being pulled near the 5V supply, transistor 88 (Q2) is turned on and electrical connection 52 is at a low voltage level or ground voltage potential.

### Second Circuit Operation State - Hall-effect Sensor

Referring to FIG. 3B and step 160 of method 150 in FIG. 6, the second operation state is attained when the operator activates, or depresses head portion 58 of push button 56 to a partially induced position, or first depress position 74. Thermal device 85 (F1) does not sense an over-temperature condition in handle 18 and electrical connection 52 is in a high resistive state. When push button 56 is depressed to first depress position 74, magnet 66 moves away from hall-effect sensor 80 (U1). Magnetic flux decreases such that the output of hall-effect sensor 80 (U1) is electrically changed to be an open circuit having high impedance. With the output of hall-effect sensor 80 (U1) being an open circuit, the voltage on transistor 87 (Q3) is pulled up near the 5 V_{DC} supply voltage turning transistor 87 (Q3) on, which effectively puts the collector of transistor 87 (Q3) at ground voltage potential. With transistor 87 (Q3) turned on, transistor 87 (Q3 becomes saturated allowing the collector of transistor 87 (Q3) to be pulled near the 5V supply voltage and transistor 86 (Q1) to be turned on allowing current flow through transistor 87 (Q3) to supply current to diode 83 (LED1) so that diode 83 (LED1) turns on. Light from diode 83 (LED1) is provided through lightpipe 84 and emits out from aperture of handle 18 illuminating an area beyond the aperture of handle 18 in a dark environment to assist the operator to locate vehicle connector 22. With transistors 86 (Q1) and 87 (Q3) being turned on, and the collector of transistor 87 (Q3) being pulled near the ground voltage potential, transistor 88 (Q2) is turned off and electrical connection 52 attains a high resistance state. The high resistance state is sensed by controller 89 in vehicle 14 and controller 89 electrically communicates with station 16 through other wire conductors 24 in handle 18 to transmit power signal on wire conductor 28 to charge battery 12 of vehicle 14.

### Third Circuit Operation State - Hall-effect Sensor

In a third state of operation of hall-effect sensor U1, head portion 58 is completely depressed, or depressed into second depress position 76. The high resistance state of electrical connection 52 is maintained as magnet 66 is even further removed from hall-effect sensor 80. In second depress position 76, head portion 58 engages latch 54. The cantilever action of the latch 54 causes hook portion 70 of latch 54 to move out and away from inlet connection 22 and allow handle connector 42 to be removed from inlet connection 22. As previously discussed herein, when push button 56 is depressed to at least first depress position 74, light emitting diode 83 (LED1) is activated. Diode 83 (LED1) also stays on if head portion 58 is disposed between first depress position 74 and second position 76 or if push button 56 is in second depress position 76.

### Fourth Circuit Operation State - Hall-effect Sensor

In a fourth state of operation thermal device 85 (F1) senses on over-temperature condition in handle 18 and configures electrical connection 52 in a high resistive state. Thermal device 85 cuts out, or breaks when the temperature in handle exceeds 105 degrees Celsius. The other elements associated with switch means 48 and activator 50 are 'don't care' or irrelevant as illustrated by reference numeral 167 in FIG. 7C. Thermal device 85 ensures electrical connection 52 is configured to the high resistive state that ensures transmission of power signals on wire conductors 28 are stopped. This provides enhances safety to the operator of handle 18 of PSS 10. If the power signals transmit electrical energy when an over-temperature condition occurs device 85 essentially mitigates overheating that may occur in handle 18 if the contact resistance between the power terminals attached to wire conductors 28 carrying of power signals of handle connector 42 and vehicle inlet connection 22 increased for any reason, such as if undesired dirt or debris gets trapped between this terminals. If the power signals are not shut down, a constant current would continue to be supplied through this increased resistance that eventually results in undesired deformation of the terminal contacts of wire conductors 28 carrying power signals. If the deformation is severe, electrical conductivity may not occur.

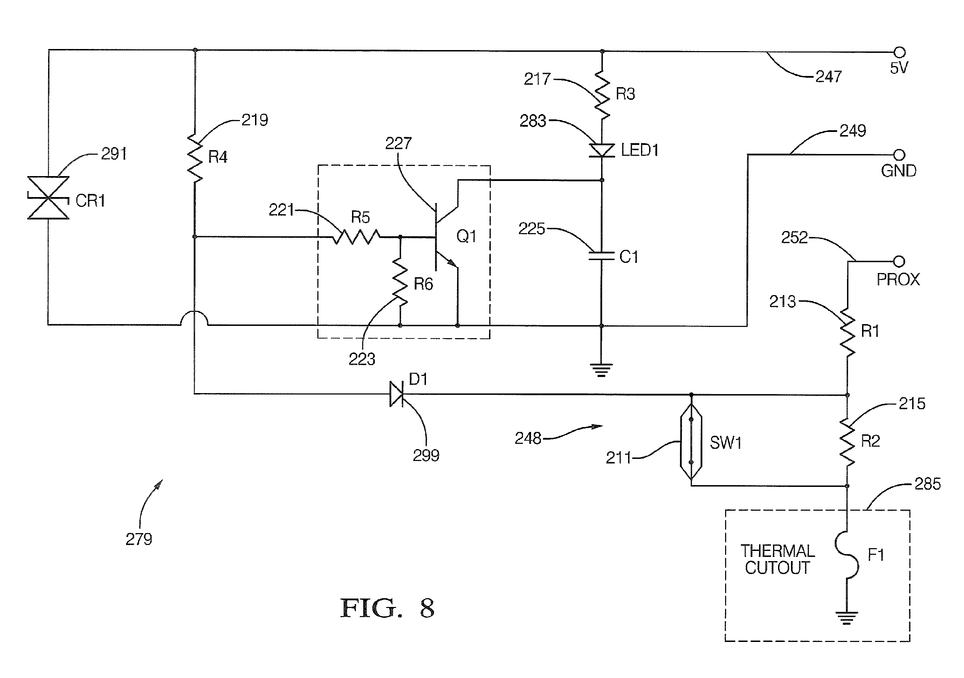

Referring to FIG. 8, in an alternate electrical circuit embodiment disposed in the charge coupler handle to the embodiment of FIG. 5 is illustrated. Similar elements with the embodiment of FIG. 5 have reference numerals differing by 200. A non-contact electrical switch means 248 is disposed in an electrical circuit 279. Switch means 248 is a reed switch 211 (SW1) used in combination with an activator (not shown) that manages, or controls an electrical connection 252 independently from unsecuring the handle connector (not shown) from the vehicle inlet connection (not shown). Reed switch 211 (SW1) is a magnetically activated switch. The activator is a dual-mode push button similar to the dual-mode push button of the embodiment of FIGS. 2-7, and is previously described herein. The truth table for the embodiment of FIG. 8 may be similar to that of the embodiment of FIGS. 2-7, as previously described herein, and as shown in FIGS. 7A-7C. The reed switch interacts with the magnet associated with the dual-mode push button, similar to the embodiment of FIGS. 2-7. The alternate embodiment of FIG. 8 is also similar to the embodiment of FIG. 5 that includes the hall-effect sensor in that there are four modes of operation when the handle connector is mated to vehicle inlet connector. A first operation state occurs when reed switch 211 (SW1) is in a normally closed position as illustrated in FIG. 8. When the dual-mode pushbutton of the embodiment of FIGS. 2-7 is not depressed by the operator of the charging system the dual-mode pushbutton is in a rest position and reed switch 211 (SW1) is in a normally closed position as illustrated in FIG. 8. Thermal device 285 (F1) does not sense an over-temperature condition in the charge coupling handle. A second operation state occurs when the dual-mode pushbutton is depressed to first depress position (not shown) and thermal device 285 (F1) does not sense an over-temperature condition in the charge coupling handle. A third state of operation is when the dual-mode push button is depressed into the second depress position (not shown) and thermal device 285 (F1) does not sense an over-temperature condition in the charge coupling handle. A fourth operation mode occurs when thermal device 285 (F1) does sense an over-temperature condition in the charge coupling handle. Voltage suppressor 291 (TVS1) is used to limit the supply voltage supplied from vehicle 14 to 5V. Resistors 213, 215, 217, 219, 221, 226 are used to provide proper biasing levels for transistor 287 (Q1), 283 (LED1) and electrical connection 252. Capacitor 225 provides additional filtering for signals in circuit 279. A DC voltage supply line 247 assists to supply operating voltage for circuit 279. Power line 247 may supply voltage for diode 283 (LED1) disposed on a printed circuit board (not shown) in the charge coupling handle. Power line 247 is supplied from the charging station (not shown). Circuit 279 is grounded to charging station through ground 249. The ground 249 is similar to ground 49 in the embodiment of FIGS. 2-7.

### First State of Operation - Reed Switch

The first state of operation uses reed switch 211 (SW1) where thermal device 285 (F1) does not sense an over-temperature condition. Referring again to FIG. 8, the first operation state includes electrical connection 252 (prox) being in a low resistive state with thermal device 285 (F1) being closed. Preferably, the low resistance state between electrical connection 252 and ground voltage potential is about 150 ohms. The head portion (not shown) of the dual-mode push button (not shown) is not depressed so that a sufficient amount of magnet flux is applied to reed switch 211 (SW1) from the magnet (not shown) to keep reed switch 211 (SW1) in a normally closed position, as illustrated in FIG. 8, keeping electrical connection 252 at a low impedance state. As shown in FIG. 8, electrical connection 252 is at about ground voltage potential. Transistor 227 (Q1) is turned off with the base of transistor 227 (Q1) being at a voltage above the voltage drop across diode 299 (D1). With transistor 227 (Q1) off the current flow through diode 283 (LED1) is minimal and diode 283 (LED1) is turned off. With diode 283 (LED1) turned off, no light is provided through the charge couple handle.

### Second State of Operation - Reed Switch

Thermal device 285 (F1) does not sense an over-temperature condition in the charge coupling handle and electrical connection 252 is in a high resistive state. Preferably, the high resistance state between electrical connection 252 and ground voltage potential may be a resistance of about 480 ohms. When the head portion of the dual-mode push button is depressed to first depress position, the magnet moves away from reed switch 211 so that the magnetic flux applied to reed switch 211 decreases. Reed switch 211 now switches to an open position allowing current to flow through resistors 213 (R1), 215 (R2). The voltage increases at the base of transistor 227 (Q1) sufficiently to turn transistor 227 (Q1) on. Turning 227 (Q1) on, allows current to flow through resistor 217 (R3) and diode 283 (LED1) to turn on diode 283 (LED1) and provide light emitting through the charge couple handle. Electrical connection 252 transitions to a high resistance state.

### Third State of Operation - Reed Switch

In a third state of operation, the dual-mode push button is depressed to a second depress position. In the second depress position, the dual-mode push button engages the latch similar to the embodiment of FIGS. 2-7.

### Forth State of Operation - Reed Switch

A fourth state of operation, thermal device 285 (F1) does sense an over-temperature condition in the charge coupling handle. When device 285 (F1) senses an over-temperature condition, device 285 (F1) breaks, or cuts out. When device 285 (F1) cuts out, electrical connection 252 is configured to a high impedance state. Preferably, the high impedance state is a high resistance state between electrical connection 252 and ground voltage potential. The resistance in the high resistance state may be about 1 Megaohm.

If electrical circuit 279 is employed without using diode 283 (LED1), a wire conductor, typically, a 16 AWG sized wire, in the bundle of wire conductors received from the charging station to the charge couple handle may be eliminated that decreases the cost of manufacture of the charging system. When diode 283 (LED1) is not used a DC power line 247 received from the charging station to the printed circuit board is not needed. Electrical connection 252 is supplied power from the vehicle similar to the embodiment of FIGS. 2-7. Reed switch 211 (SW 1) does not require electrical power to operate since it operates on magnetic energy, which is to say the contacts of reed switch 211 (SW 1) are open and closed magnetically dependent on the magnet position where the magnet position is determined by the state of the push button.

Circuits 79 and 279 are solid-state electrical circuits having non-contact electrical switches. Each non-contact switch is resistant to environmental effects, such as dust, dirt, and water. Alternately, snap action microswitches may be used as the non-contact electrical switch. However, the microswitches preferably need to be sealed against undesired environmental effects, such as dirt and water, to ensure a robust design. Sealing of the microswitches adds additional undesired cost.

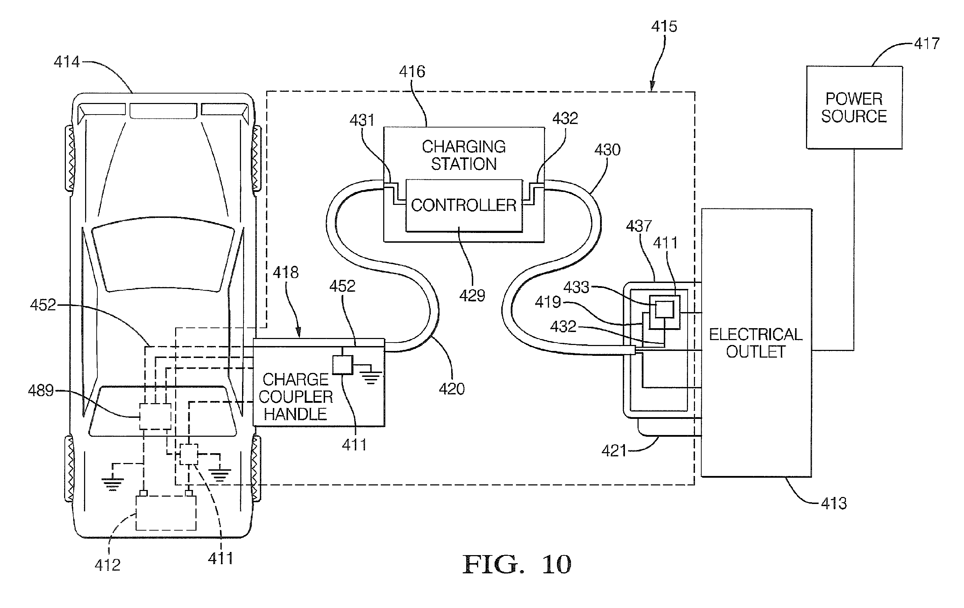

Referring to FIG. 10, according to an alternate embodiment of the invention, a PSS 415 further includes a controller 429 that is in electrical communication with each of the plurality of TTEBAs 411. Elements in the embodiment of FIG. 10 that are similar to those in the embodiment of FIGS. 1 and 2 have reference numerals that differ by 400. One TTEBA 411 is disposed in vehicle 414 and another TTEBA 411 is disposed in charge couple handle 418 and yet another TTEBA 411 is disposed in plug 437. TTEBA 411 in plug 437 is a thermocouple device 433. TTEBAs 411 of PSS 415, similar to that of embodiment of FIGS. 1 and 2, may also include thermal fuses, thermistors, and thermocouples as previously discussed herein, and there usage is and is dependent the electrical application of use for the PSS. Wire conductors that include electrical connections 432 electrically connect thermocouple device 433 with controller 429 are included within cable 430. At least two wire conductor electrical connections are needed to electrically connect thermocouple 433 with controller 429 through cable 430. Similarly, electrical connections 431 electrically connect with TTEBAs 411 disposed in handle 418 and vehicle 414 through cable 420 and handle 418. TTEBA 411 in vehicle 414 disposed proximate battery 412 and is useful to thermally protect the human operator if a thermal event occurs in the localized area proximate battery 412. Alternately, the TTEBA disposed in the vehicle may not be employed. When the TTEBAs 411 are electrically connected to controller 429, controller 429 is configured so that when any of the TTEBAs are thermally activated, controller 429 of PSS 415 electrically breaks EPC 419 associated with power source 417. This action electrically disconnects PSS 415 from power source 417 at outlet 413 so that no electrical current flows in to PSS 415 from outlet 413. Alternately, the controller may be configured to electrically break any number power connections of the PSS if at least one TTEBA in the PSS is electrically broken and the mechanization to electrically break the TTEBAs, and which ones to electrically break when at least one TTEBA is electrically broken is predetermined based on the electrical application where the PSS is used. Still yet alternately, the controller may be disposed in the PSS in a different location from that of the charging station, such as in the charge couple handle, for example. Alternately, the electrical circuit of the battery, the controller disposed in the vehicle and the TTEBA in the vehicle may be arranged dependent of the application of use of the PSS.

PSS 10, 415 are respectively not in use when not electrically powered. If respective plug 32, 437 is not coupled in respective electrical outlet 13, 413 that is electrically active, respective PSS 10, 415 is not electrically powered.

PSS 10, 415 is in use at least when respective plug 32, 437 is coupled in respectively electrically operative electrical outlet 13, 413 and handle 18, 418 is coupled to vehicle 14, 414, as best illustrated in FIGS. 2 and 10. Electrical current flows through handle 18, 418 when battery 12, 412 requires electrical charge as allowed by vehicle controller 89, 489. Referring to FIG. 2, at least a portion of PSS 10 becomes electrically broken when at least one TTEBA in the plurality of TTEBAs 11 is thermally activated. Referring to FIG. 10, PSS 415 becomes electrically inactive, or broken when any one TTEBA in the plurality of TTEBAs 411 is electrically broken. Controller 429 ensures PSS 415 is electrically disconnected from outlet 413 and power source 417.

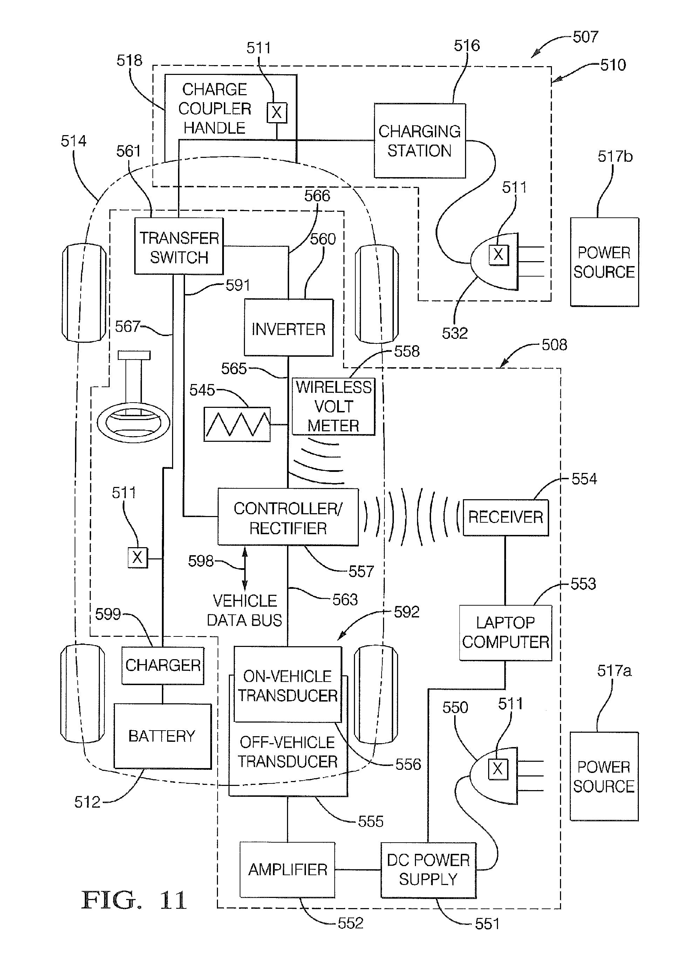

Referring to FIG. 11, according to yet another embodiment of the invention, a PSS 507 contains a plurality of electrical charging systems 508, 510 that collectively contain a plurality of TTEBAs 511. Electrical charging system 508 is a primary electrical charging system and electrical charging system 510 is a secondary electrical charging system that is different from primary electrical charging system 508. PSS 507 advantageously is configured to produce electrical current to electrically charge battery 512 on vehicle 514. Elements 510, 511, 512, 514, 516, 518, and 532 illustrated in PSS 507 of the embodiment of FIG. 11 that are similar to elements illustrated in PSS 10 of the embodiment illustrated in FIGS. 1 and 2 have reference numerals that differ by 500. PSS 507 includes a first and a second and a third portion. Primary system 508 includes the first and the second portion. The first portion of primary system 508 is disposed external to vehicle 514 and the second portion is disposed on vehicle 514. The third portion of PSS 507 is secondary system 510. The first, second, and third portions of PSS 507 are described in further detail below under their respective headings.

Primary and secondary system 508, 510 are constructed from similar electrical components used to construct PSS 10 in the embodiment of FIGS. 1 and 2 as previously described herein. The plurality of EDs include battery 512 disposed in vehicle 514 and power sources 517a, 517b disposed external to PSS 507 and vehicle 514. Battery 512 is also disposed external to primary and secondary systems 508, 510 of PSS 507. Primary system 508 is electrically powered by power source 517a and secondary system 510 is electrically powered by power source 517b. Respective plugs 532, 550 of primary and secondary system 508, 510 releasably couple with electrical outlets (not shown) similar to plug 32 in the embodiment of FIGS. 1 and 2 previously described herein. Power source 517a that electrically powers primary system 508 is a 240 V_{AC} power source and power source 517b that electrically powers secondary system 510 is a 120 V_{AC} power source. Alternately, the primary and the secondary system may be powered by the same power source where the power source is 120 V_{AC} or 240 V_{AC}. In a further alternate embodiment, any AC voltage may be utilized for the power source for the primary and/or the secondary electrical charging system that is effective to charge the battery of the vehicle. Still yet alternately the frequency of the power source for either the primary and/or secondary system may be 50-60 Hz. In another alternate embodiment, the primary system and/or secondary system may be respectively electrically hardwired to a power source of any voltage value such that the electrical outlets are not needed. Having one or more of the electrical systems being hardwired may be advantageous for the human operator in that less electrical hook-up is required by the human operator each time the primary or secondary system is needed for use. The human operator also does not need to handle PSS components electrically wired to the high voltage energy which provides additional safety to the human operator.

### Primary Electrical Charging System

The first portion of primary system 508 external to vehicle 514 receives energy from power source 517a, amplifies the received energy, and wirelessly transmits or propagates at least a portion of the amplified energy to the second portion of the primary system 508 disposed on vehicle 514. The second portion of primary system 508 receives and couples the propagated energy from the first portion of primary system 508 and electrically transforms the coupled wirelessly transmitted energy to electrical current that is subsequently used to electrically charge battery 512 of vehicle 514. The first portion of primary system 508 includes a plug 550 coupled to a cord that attaches with a DC power supply 551, a computer 553, a receiver 554, an amplifier 552, and an off-vehicle transducer 555. The second portion of primary system 508 attached to vehicle 514 includes an on-vehicle transducer 556, a controller/rectifier 557, a ballast resistor 545, a wireless voltmeter 558, an inverter 560, a transfer switch 561, and a TTEBA 511 disposed proximate to battery 512. Another TTEBA 511 is disposed in plug 550 of primary system 508. Off-vehicle transducer 555 and on-vehicle transducer 556 form an energy coupling arrangement 592 that couples at least a portion of energy produced external to vehicle 514 and is propagated to vehicle 514 that is used to electrically charge battery 512. Energy coupling arrangement 592 may be formed as a plain inductive coupling arrangement, a magnetic coupling arrangement, or a wireless electrical coupling arrangement. Alternately, the controller/rectifier block may be disposed as separate, distinct functional blocks within the primary system. Computer 553 analyzes the received data from controller/rectifier 557 via receiver 554 and adjusts DC power supply 551 to ensure that an output of rectifier 557 is within a range dependent on the electrical application of use for the primary system 508. The receiver may also be used as a receiver/transmitter to communicate with charger 599 and/or the on-board vehicle portion of primary system 508 to ensure optimal electrical charging of battery 599. Controller/rectifier 557 may also receive/transmit data to charger 599 through vehicle data bus 598.

The energy is supplied to the first portion by a 240 V_{AC} power source 517a when plug 550 is coupled in the electrical outlet. The electrical outlet is an extension of power source 517a. The energy is received by a DC power supply 551 that produces a DC voltage that is modulated by amplifier 552 to become a high frequency AC voltage that is output from amplifier 552. The high frequency AC voltage output from amplifier 552 may be in range from 20 to 200 kilohertz. The high frequency AC voltage is received by on-vehicle transducer 555. On-vehicle transducer 556 of the second portion of the primary system 508 wirelessly receives and couples at least a portion of the amplified, high-frequency AC voltage and transmits this portion along signal path 563 to controller/rectifier 557. Controller/rectifier 557 electrically rectifies this voltage to produce a corresponding direct current (I_{DC}). This I_{DC} current is electrically transmitted along signal path 565 to invertor 560 that inverts the corresponding DC current to produce a 50-60 Hertz electrical current that is configured for use to electrically charge battery 512. The 50-60 hertz electrical current is transmitted along signal path 566 to transfer switch 561. When transfer switch 561 is set to a first state to allow primary system 508 to electrically charge battery 512 the 50-60 hertz signal is carried along signal path 567 to charger 599. Transfer switch 561 is selectably controlled by controller/rectifier 557 via control signal 591 to operatively control a state of transfer switch 561. When controller/rectifier 557 sets switch 561 to the first state, the electrical current produced by primary system 508 is configured to electrically charge battery 512 as previously described above. When controller/rectifier 557 sets switch 561 to a second state through control signal 591, secondary system 510 is configured to electrically charge battery 512. Alternately, the controller may set the transfer switch to a third state to allow both the primary and the secondary system to electrically charge the battery at the same time. Transfer switch 561 is in electrical communication with a vehicle charger 599 that regulates and controls the voltage that is useful to electrically charge battery 512. Vehicle charger 599 is used by electrical systems of vehicle 514 to allow independent control of battery charging independent of PSS 507. In another embodiment, the vehicle charger has similar functionality to that of controller 89 as illustrated in the embodiment of FIG. 1. Thus, charger 599 may further modify or manage the electrical charging of battery 512 from electrical current received from PSS 507. Alternately, the functionality of the vehicle charger may be included as part of the PSS system. Still yet alternately, the vehicle charger may not be employed.

Controller/rectifier 557 communicates with a vehicle data bus 598. Alternately, the transfer switch may be controlled by another electrical device in the vehicle through the vehicle data communication bus. Vehicle data communication bus 598 may communicate status information to the primary system 508 regarding the electrical hookup of secondary system 510. Wireless voltmeter 558 measures the magnitude of the voltage and/or electrical current at the output of controller/rectifier 557 along signal path 565. This voltage information is wirelessly communicated with receiver 554 in the first portion of primary system 508. Knowing the on-board vehicle voltage information allows for the variable adjustment of the off-vehicle transducer by the primary system to optimize electrical operation of primary system 508. Ballast resistor 545 is used to minimize the magnitude of the voltage along signal path 565 during start-up of primary system 508. Alternately, ballast resistor may not be used in the primary system. In one embodiment, the electrical current available to charge the battery may be in a range of 10-20 amps. The primary and the secondary system 508, 510 may charge battery 512 with the same amount of electrical current, but primary system 508 may electrically charge battery 512 in less time being supplied with power produced from the 240 V_{AC} power source 517a versus secondary system 510 being supplied with power from the 120 V_{AC} power source 517b. Alternately, the TTEBA proximate the battery disposed in the vehicle may not be employed. In another alternate embodiment, the TTEBA in the plug is not employed. Still yet alternately, the primary system may not use plug 550 and may be hardwired to a power source such that the TTEBA used with plug 550 may not be utilized.

### Secondary Electrical Charging System

Secondary system 510 is similar to PSS 10 as previously described herein in the embodiment of FIGS. 1 and 2. Alternately, the secondary system may be PSS 415 as illustrated in FIG. 10, as also previously described herein. Secondary system 510 is configured to supply 50-60 hertz electrical current to battery 512 when at least a portion of the electrical current supplied by the secondary system 510 is electrically transmitted through at least a portion of primary system 508 that is disposed on vehicle 514. When secondary system 510 electrically charges battery 512, primary system 510 is configured to electrically break from electrically charging battery 512. Primary system 508 uses switch 561 to select the coupled secondary system 510 to electrically charge battery 512. Alternately, the secondary system may electrically charge the battery in combination with the primary system. Still yet alternately, the secondary system may be any type of electrical charging system that is different from PSS 10, 415 that is still useful to electrically charge battery 412.

Secondary system 510 electrically operates is a manner as previously described herein. Secondary system 510 is not in use when transfer switch 561 is not in a state that selects secondary system 510 to electrically charge battery 512. Secondary system 510 also not in use if secondary system is not electrically coupled to a live power source 517b.

Primary system 508 is not in use when the first portion of primary system 508 disposed external to vehicle 514 is not electrically connected to power source 517a. Primary system 508 is also not in use when transfer switch 561 is not in a state that selects primary system 508 to electrically charge battery 512.

Primary system 508 is partially in use when the first portion of primary system 508 disposed external to vehicle 514 is electrically connected to power source 517a and second portion of primary system 508 does not wireless receive energy from the first portion of the primary system 508.

Primary system 508 is in use when the first portion of primary system 508 disposed external to vehicle 514 is electrically connected to power source 517a and second portion of primary system 508 wirelessly receive energy from the first portion of the primary system 508 to be transferred to electrical current in the second portion of the primary system 508. Electrical current flows through second portion of primary system 508 when battery 512 requires electrical charge. Secondary system 510 is in use when transfer switch 561 is in a state that selects secondary system 510 to electrically charge battery 512 and when secondary system is electrically coupled to a live power source 517b.

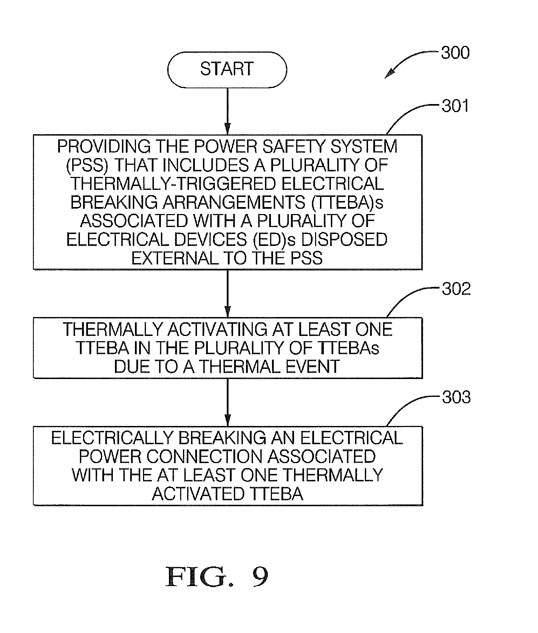

Referring to FIG. 9, a method 300 to protect a human operator of the respective PSS embodiments of FIGS. 1, 2, 10, and 11. The human operator is protected from possible undesired injury if electrical current is flowing through PSS components that are handled by the human operator when a potentially unknown thermal event occurs. One step 301 in method 300 is providing PSS 10, 415, 507 that includes a plurality of TTEBAs 11, 411, 511 associated with a plurality of EDs 12, 17, 412, 417, 512, 517a, 517b disposed external to PSS 10, 415, 507. PSS 10, 415, 507 is configured for electrical communication with plurality of EDs that 12, 17, 412, 417, 512, 517a, 517b further includes respective EPCs 19, 52, 419, 452, 566, 567 between PSS 10, 415, 507 and the plurality of EDs 12, 17, 412, 417, 512, 517a, 517b. PSS 10, 415, 507 is configured for electrical connection to at least one PS 17, 417, 517a, 517b by the human operator. Another step 302 in method 300 is thermally activating at least one of the TTEBAs in the plurality of TTEBAs 11, 411, 511 due to the thermal event when PSS 10, 415, 507 is electrically connected to the at least one PS 10, 415, 507. A further step 303 in method 300 is electrically breaking the EPC associated with the at least one thermally activated TTEBA.

Alternately, any electrical charging system that includes electrical circuits, techniques, or methods that allow the electrical connection to be managed, or controlled independent from the unsecuring of the handle connector, preferably so the transmission of the power signals are stopped before the handle connector of the coupler handle is releasable from the vehicle inlet connection is within the spirit and scope of the invention as described herein.

In another alternate embodiment, the bipolar devices in the hall-effect and reed circuits may include other types of electronic switch devices, such as FETS, MOSFETS, and the like.

Alternately, the resistance output states at the electrical connection may be voltage or current levels that establish different types of output states. Yet alternately, the logic levels may be edge-triggered output configurations that establish a difference between to operational output states. Still yet alternately, the electrical connection may be electrically manipulated in any possible way to establish a difference in an operational characteristic of the electrical connection.

Alternately, the activator may be a pull-lever mechanism, such as is similar to that found on a typical gasoline pump that allows displacement of the magnet away from the switch. Still yet alternately, any mechanism that allows displacement of the magnet away from the switch is covered by the spirit and scope of the invention.

Still yet alternately, the electrical output to the vehicle inlet connection may be supplied with voltage resident in the handle and supplied from the charging station.

Alternately, the vehicle inlet connection may also be included in the charging system. This ensures that a provision on the shoulder more easily communicates with the securing mechanism when the handle connector is connected to the vehicle inlet connection. Should the provision be different than that required by the securing mechanism undesired difficulty may arise connecting and unconnecting the handle connector where recharging the battery may not occur.

Alternately, the system may be used to supply power signals to supply electric charge to any type of battery that includes, but is not limited to a marine battery, truck battery, and the like.

Still yet alternately, other motorized vehicles in the transportation may use the charging system as described herein if the SAE J-1772 standard is adopted by non-automotive industries to switch AC power to the load. The SAE J-1772 standard is an automotive industry standard and an on-board vehicle charger is the electrical load.

Alternately, another type of status indicator for a PSS may include visually displaying the status of one or more of the TTEBAs on a display disposed on the charger or in any other portion of the PSS. For example, the controller in FIG. 10 may provide the needed data to populate the display information wherever it is viewed by the human operator.

In a further alternate embodiment, the charge couple handle is not limited to being formed with a hall effect sensor or a reed switch to be within the spirit and scope of the invention, rather, any charge couple handle may be used that is effective to couple with the vehicle and electrically charge the battery as long as the PSS has a plurality of TTEBAs and associated EPCs as described previously herein.

In another alternate embodiment, the power sources used to supply energy to operate the PSS may be any voltage to effectively electrically charge the battery of the vehicle.

In yet other alternate embodiments, the PSS may be used to electrically charge any type of electrical device where it is desired to further protect the human operator from a thermal event.

Thus, a PSS that protects the human operator from thermal events that includes a plurality of thermally-triggered electrical breaking arrangements (TTEBAs) has been presented. The TTEBAs are associated with a plurality of electrical devices (EDs) disposed external to the PSS, that when a TTEBA in the plurality of TTEBAs is thermally activated, a power connection associated with the TTEBA that electrically connects the PSS and the corresponding electrical device is electrically broken. The human operator is safely protected from possible undesired injury if electrical current is flowing through PSS components that are handled by the human operator when a potentially unknown thermal event occurs. The TTEBAs may be thermal fuses, thermistors or thermocouples. The PSS may be configured so that when any one TTEBA in the plurality of TTEBAs is electrically broken a power connection of the PSS associated with a power source is electrically broken. With this electrical configuration no electrical current flows anywhere in the PSS when any type of thermal event occurs that affects a TTEBA of the PSS. The PSS may be a plug-in electrical charging system. The status indicator associated with any particular TTEBA will visually or audible warn the human operator when a broken TTEBA needs repaired. This provides easy, direct notification to the human operator if the PSS does not operate as a result of a thermally activated TTEBA. The TTEBA disposed in the plugs of the PSS are injection molded therein so that the plugs are easily handled by the human operator. The PSS may also include a plurality of electrical charging systems that at least includes a primary and a secondary electrical charging system. TTEBAs may be disposed in both the primary and the secondary electrical charging system to protect the human operator from a thermal event. The primary electrical charging system being powered from a 240 V_{AC} power source will generally electrically charge the battery in a shorter amount of time than the secondary electrical charging system powered from a 120 V_{AC} power source. Furthermore, the charge couple handle includes a mechanical latch that securely mechanically locks the handle to the vehicle passively when the handle is manually attached to the vehicle by a human operator to create an electrical connection between the vehicle and the charger. The handle has an actuator movable by the operator from a deactivated state to a first and a second position activated state where the mechanical latch operates independently of the state of the actuator when the handle is being manually attached but being mechanically released by the actuator when it is moved to its second activated state. A non-contact electrical switch means associated with the actuator breaks the electrical connection when the actuator is moved to the first position activated state before releasing the mechanical latch at the second activated position. A dual-activation push button includes a magnet that works in combination with the non-contact switch means where the non-contact switch means is a hall-effect sensor to operatively determine resistance operational states of the electrical connection. The dual-activation push button and magnet may also be combined with a reed switch to provide the similar beneficial features. An ergonomically designed handle is easily grasped by the operator of the handle to connect the handle to the vehicle inlet connection. The hall-effect sensor or reed switch is strategically located in passage of a handle on a printed circuit board to allow magnetic flux interaction with the magnet disposed on an extendable portion of a dual-mode push button. The handle may include a lamp that is activated with at least partial activation of the push-button to provide light to accurately locate the vehicle inlet connection in a dark environment for connection of the handle to the vehicle inlet connection. The thermal shutdown cutout device disposed in the charge coupler handle senses for an over-temperature event and alters the electrical connection to a high resistance state to electrically break the electrical connection during a sensed over temperature event. The high resistance state, as seen by the vehicle, prevents transmission of current on wire conductors carrying power signals through the handle for increased safety to the operator. A charging system powered by 120 V_{AC} is constructed in a compact size that is suitable for storage in a trunk of the vehicle for remote use anywhere the vehicle travels as long as a 120 V_{AC} power source is available when the battery needs to be electrically charged. The charging system any also be configured to be run off 240 V_{AC} to charge the battery in a shorter time period in contrast with the charging station being connected to the 120 V_{AC} power source.

While the present invention has been shown and described with reference to certain preferred embodiments thereof, it will be understood by those skilled in the art that various changes in form and details may be made therein without departing from the spirit and scope of the present invention as defined by the appended claims.

All terms used in the claims are intended to be given their broadest ordinary meanings and their reasonable constructions as understood by those skilled in the art unless an explicit indication to the contrary is made herein. In particular, use of the singular articles such as "a," "the," "said," ... et cetera, should be read to recite one or more of the indicated elements unless a claim recites an explicit limitation to the contrary.

## Claims

1. A power safety system (PSS) (10) comprising:
a plurality of thermally-triggered electrical breaking arrangements (TTEBAs) (11, 411, 511) associated with a plurality of electrical devices (EDs) (12, 17, 412, 417, 512, 517a, 517b) disposed external to the PSS (10); and
a plurality of electrical power connections (EPCs) (19, 52, 419, 452) associated with said plurality of TTEBAs (11, 411, 511) that are configured to respectively electrically connect the PSS (10) to the plurality of EDs (12, 17, 412, 417, 512, 517a, 517b),
wherein when at least one TTEBA (11, 411, 511) in the plurality of TTEBAs (11, 411, 511) is electrically operative and at least one thermal event occurs that is sufficient to thermally activate said at least one electrically operative TTEBA (11, 411, 511), at least said EPC (19, 52, 419, 452) associated with said at least one thermally activated TTEBA (11, 411, 511) is electrically broken.

2. The PSS (10) according to claim 1, wherein the PSS (10) is electrically connected to at least one power source (PS) (17, 417, 517a, 517b), and said at least one TTEBA (11, 411, 511) is thermally activated, the PSS (10) electrically breaks the EPC (19, 52, 419, 452) associated with said at least one PS (17, 417, 517a, 517b).

3. The PSS (10) according to claim 1, wherein at least one ED (12, 17, 412, 417, 512, 517a, 517b) in the plurality of EDs (12, 17, 412, 417, 512, 517a, 517b) includes at least one energy storage device (ESD) (12, 412, 512).

4. The PSS (10) according to claim 1, wherein the PSS (10) is electrically operative when in electrical communication with a power source (PS) (17, 417, 517a, 517b), and the PS (17, 417, 517a, 517b) further includes an electrical outlet (13, 413), and the PSS (10) further includes,
at least one plug (32, 437, 532, 550) configured to releasably couple with the electrical outlet (13, 413), said at least one plug (32, 437, 532, 550) including said least one TTEBA (11, 411, 511).

5. The PSS (10) according to claim 1, wherein one or more TTEBA (11, 411, 511) in the plurality of TTEBAs (11, 411, 511) includes a thermal fuse.

6. The PSS (10) according to claim 1, wherein one or more TTEBA (11, 411, 511) in the plurality of TTEBAs (11, 411, 511) includes a thermistor.

7. The PSS (10) according to claim 1, wherein one or more TTEBA (11, 411, 511) in the plurality of TTEBAs (11, 411, 511) includes a thermocouple.

8. The PSS (10) according to claim 1, wherein one or more TTEBA (11, 411, 511) in the plurality of TTEBAs (11, 411, 511) includes at least thermal fuse and at least one thermistor.

9. The PSS (10) according to claim 1, wherein the PSS (10) is an electrical charging system (ECS) for electrically charging an energy storage device (ESD) (12, 412, 512), and said ESD (12, 412, 512) is disposed on a vehicle, and said ESD (12, 412, 512) is one of the Eds (12, 17, 412, 417, 512, 517a, 517b) in the plurality of Eds (12, 17, 412, 417, 512, 517a, 517b).

10. The PSS (10) according to claim 9, wherein the ECS includes a plug and a charge coupler, and the plug (32, 437, 532, 550) and the charge coupler respectively include said at least one TTEBA (11, 411, 511) in the plurality of TTEBAs (11, 411, 511) and the plug (32, 437, 532, 550) is configured to electrically communicate with a power source (PS) (17, 417, 517a, 517b), and the PS (17, 417, 517a, 517b) is an ED (12, 17, 412, 417, 512, 517a, 517b) in the plurality of EDs (12, 17, 412, 417, 512, 517a, 517b).

11. The PSS (10) according to claim 1, wherein the PSS (10) comprises a plurality of electrical charging systems configured to electrically charge at least one energy storage device (ESD) (12, 412, 512), said plurality of electrical charging systems including a primary electrical charging system (508) and a secondary electrical charging system (510) that is different that the primary electrical charging system (508), and said at least one energy storage device (ESD) (12, 412, 512) is at least one ED (12, 17, 412, 417, 512, 517a, 517b) in the plurality of EDs (12, 17, 412, 417, 512, 517a, 517b).

12. The PSS according to claim 11, wherein at least two TTEBAs (11, 411, 511) in the plurality of TTEBAs (11, 411, 511) are configured to be adjacently disposed to at least one power source (PS) (17, 417, 517a, 517b) that electrically powers the plurality of electrical charging systems, and the at least one PS is disposed external to the respective plurality of electrical charging systems, and said at least two TTEBAs (11, 411, 511) are respectively disposed in power plugs (32, 437, 550) of the plurality of electrical charging systems.

13. The PSS (10) according to claim 11, wherein the primary system (508) produces electrical current to electrically charge said at least one ESD (12, 412, 512) from energy propagated to a section of the primary system (508) from a power source (PS) (17, 417, 517a, 517b) disposed external to the vehicle and the PSS (10).

14. The PSS (10) according to claim 11, wherein when the secondary system (510 )electrically charges the at least one ESD (12, 412, 512), the primary system (508) is electrically broken from electrically charging the at least one ESD (12, 412,512).

15. A method to protect a human operator of a power safety system (PSS) (10) from a thermal event, comprising:
providing the PSS (10) that includes a plurality of thermally-triggered electrical breaking arrangements (TTEBAs) (11, 411, 511) associated with a plurality of EDs (12, 17, 412, 417, 512, 517a, 517b) disposed external to the PSS (10), the PSS (10) configured for electrical communication with the plurality of Eds (12, 17, 412, 417, 512, 517a, 517b) that further includes a respective electrical power connection (EPC) (19, 52, 419, 452) between the PSS (10) and the plurality of EDs (12, 17, 412, 417, 512, 517a, 517b), the PSS (10) configured for electrical connection to at least one power source (PS) (17, 417, 517a, 517b) by the human operator;
thermally activating at least one of the TTEBAs (11, 411, 511) in the plurality of TTEBAs (11, 411, 511) due to the thermal event when the PSS (10) is electrically connected to said at least one PS (17, 417, 517a, 517b); and
electrically breaking said EPC (19, 52, 419, 452) associated with the said at least one thermally activated TTEBA (11, 411, 511).
